# EUROPEAN PATENT APPLICATION

(11) **EP 3 604 348 A1**
(43) Date of publication of application: **05.02.2020**
(21) Application number: 18774873.6
(22) Date of filing: 29.03.2018
(51) Int. Cl.: C08F 2/26, C08F 214/20, C08F 220/18, C08F 259/08, C08L 27/12, C08L 33/04, C09D 5/02, C09D 127/12, C09D 133/04

(54) **PRODUCTION METHOD FOR AQUEOUS DISPERSION**

(30) Priority: 29.03.2017 JP 2017064830; 03.10.2017 JP 2017193509
(71) Applicant: AGC Inc., Chiyoda-ku Tokyo 100-8405 (JP)
(72) Inventor: KAKIUCHI Toshifumi, Tokyo 100-8405 (JP); NAKASHIMA Toshio, Tokyo 100-8405 (JP); MUROTANI Eisuke, Tokyo 100-8405 (JP); SAITO Shun, Tokyo 100-8405 (JP); ISHITSUKA Kei, Tokyo 100-8405 (JP)
(74) Representative: Müller-Boré & Partner Patentanwälte PartG mbB
(86) International application number: PCT/JP2018/013310
(87) International publication number: WO 2018/181740

(57) **Abstract**

An object of the present invention is to provide an aqueous dispersion capable of forming a coating film excellent in water resistance, antifogging properties and durable light resistance, a method for producing the aqueous dispersion, an aqueous coating material, and a coated article. This aqueous dispersion comprises water, a surfactant and polymer particles dispersed in the water, wherein the polymer particles contained in the aqueous dispersion are fluoropolymer particles and (meth)acrylate polymer particles, or polymer particles comprising a fluoropolymer and a (meth)acrylate polymer; the fluoropolymer contains units based on a fluoroolefin in an amount of from 95 to 100 mol% to all units which the fluoropolymer comprises; the (meth)acrylate polymer contains units based on an alkyl(meth)acrylate in an amount of from 75 to 100 mol% to all units which the (meth)acrylate polymer comprises; and the surfactant is a compound of such a structure that to a benzene ring, 1 group represented by the formula - (OQ)ₙOSO₃⁻X⁺ (where Q is an alkylene group, n is an integer of from 2 to 48, and X⁺ is Na⁺ or NH₄⁺) and 2 to 4 phenylalkyl groups are bonded. A method for producing the aqueous dispersion is also provided.

## Description

### TECHNICAL FIELD

The present invention relates to an aqueous dispersion having polymer particles dispersed in water, and to a method for producing the aqueous dispersion.

### BACKGROUND ART

From the viewpoint of environmental protection, in the field of coating materials, an aqueous coating material using water as a coating solvent has attracted attention. Further, from the viewpoint of coating film properties such as weather resistance, chemical resistance, solvent resistance, etc., an aqueous coating material containing a fluoropolymer is expected, and particularly from the viewpoint of workability and economical efficiency, an aqueous coating material containing a fluoropolymer and a (meth)acrylate polymer is expected.

Patent Document 1 discloses an aqueous dispersion which contains water and sodium lauryl sulfate and in which polymer particles comprising a fluoropolymer and a (meth)acrylate polymer are dispersed in the water.

### PRIOR ART DOCUMENT

### PATENT DOCUMENT

Patent Document 1: JP-A-2002-188052

### DISCLOSURE OF INVENTION

### TECHNICAL PROBLEM

An aqueous coating material is sometimes inferior in the water resistance of its coating film, as compared with a solvent type coating material containing an organic solvent as the coating solvent. The water resistance of the coating film formed from the aqueous dispersion containing a fluoropolymer and a (meth)acrylate polymer as disclosed in Patent Document 1, was not yet sufficient. Further, the coating film is sometimes required to have an antifogging property to inhibit adhesion of water droplets, but the antifogging property of the coating film formed from the aqueous dispersion as disclosed in Patent Document 1, was not yet sufficient. In particular, if the coating film was exposed for a long period of time under an environment in contact with water, the water resistance and antifogging property were likely to decrease.

Further, when exposed for a long period of time in an outdoor environment, the coating film formed from the aqueous dispersion as disclosed in Patent Document 1 was likely to be deteriorated and peeled.

Therefore, an aqueous coating material containing a fluoropolymer and a (meth)acrylate polymer, which is capable of forming a coating film excellent in water resistance and antifogging property and also excellent in durable light resistance, has been desired.

The present invention has been made in view of the above problem and has an object to provide an aqueous dispersion capable of forming a coating film excellent in water-resistance, antifogging property and durable light resistance, and a method for its production.

### SOLUTION TO PROBLEM

The present inventors have made intensive studies in order to solve the above problem, and as a result, they have found it possible to obtain the desired effects, if a specific surfactant is incorporated to an aqueous dispersion having specific polymer particles dispersed, and thus have arrived at the present invention.

That is, the present inventors have found that the above problem can be solved by the following constructions.
[1] An aqueous dispersion comprising water, a surfactant and polymer particles dispersed in the water, wherein
   the polymer particles contained in the aqueous dispersion are fluoropolymer particles and (meth)acrylate polymer particles, or polymer particles comprising a fluoropolymer and a (meth)acrylate polymer,
   the fluoropolymer contains units based on a fluoroolefin in an amount of from 95 to 100 mol% to all units which said fluoropolymer comprises,
   the (meth)acrylate polymer contains units based on an alkyl (meth)acrylate in an amount of from 75 to 100 mol% to all units which said (meth)acrylate polymer comprises, and
   the surfactant is a compound of such a structure that to a benzene ring, 1 group of the formula -(OQ)ₙOSO₃⁻X⁺ (wherein Q is a C₂₋₄ alkylene group, n is an integer of from 2 to 48, and X⁺ is Na⁺ or NH₄⁺) and 2 to 4 phenylalkyl groups are bonded.
[2] The aqueous dispersion according to [1], wherein the above polymer particles comprising a fluoropolymer and a (meth)acrylate polymer are polymer particles of a core-shell form wherein the fluoropolymer is a core portion and the (meth)acrylate polymer is a shell portion.
[3] The aqueous dispersion according to [1], wherein the above aqueous dispersion comprises fluoropolymer particles derived from a fluoropolymer aqueous dispersion, and (meth)acrylate polymer particles derived from a (meth)acrylate polymer aqueous dispersion.
[4] The aqueous dispersion according to any one of [1] to [3], wherein in the surfactant, each of two groups among the 2 to 4 phenylalkyl groups is bonded to a carbon atom at an ortho position to the carbon atom in the benzene ring, to which the above group represented by the formula -(OQ)ₙOSO₃⁻X⁺ is bonded.
[5] The aqueous dispersion according to any one of [1] to [4], wherein to the benzene ring in the surfactant, at least one group of either an alkyl group or an alkoxy group is further bonded.
[6] The aqueous dispersion according to any one of [1] to [4], wherein to the benzene ring in the surfactant, at least one methyl group is further bonded.
[7] The aqueous dispersion according to any one of [1] to [6], wherein the group represented by the formula -(OQ)ₙOSO₃⁻X⁺ in the surfactant is a group represented by the formula -(OCH₂CH₂)ₙ₀OSO₃⁻X⁺ (wherein n0 is an integer of from 6 to 24, and X⁺ is Na⁺ or NH₄⁺).
[8] The aqueous dispersion according to any one of [1] to [7], wherein the phenylalkyl groups in the surfactant are phenylethyl groups.
[9] The aqueous dispersion according to any one of [1] to [8], wherein the content of the surfactant is from 0.0001 to 10 mass%, to the total mass of the aqueous dispersion.
[10] The aqueous dispersion according to any one of [1] to [9], wherein the fluoroolefin consists of at least two types selected from the group consisting of CF₂=CF₂, CF₂=CFCF₃, CF₂=CFCl and CH₂=CF₂.
[11] The aqueous dispersion according to any one of [1] to [10], wherein the alkyl (meth)acrylate consists of at least one type selected from the group consisting of methyl (meth)acrylate, ethyl (meth)acrylate, propyl (meth)acrylate, butyl (meth)acrylate, 2-ethylhexyl (meth)acrylate and cyclohexyl (meth)acrylate.
[12] The aqueous dispersion according to any one of [1] to [11], wherein the (meth)acrylate polymer further contains units based on a hydroxyalkyl (meth)acrylate in an amount of more than 0 mol% and at most 20 mol% to all units which said (meth)acrylate polymer comprises.
[13] An aqueous coating material comprising the aqueous dispersion as defined in any one of [1] to [12].
[14] A coated article comprising a substrate and a coating film disposed on the substrate and formed from the aqueous coating material as defined in [13].
[15] A method for obtaining an aqueous dispersion in which core-shell form polymer particles wherein a fluoropolymer is a core portion and a (meth)acrylate polymer is a shell portion are dispersed in water, by polymerizing an alkyl (meth)acrylate in the presence of a dispersion having fluoropolymer particles dispersed in water, wherein the polymerization of the alkyl (meth)acrylate is carried out in the presence of a surfactant which is such a compound that to a benzene ring, 1 group represented by the formula-(OQ)ₙOSO₃⁻X⁺ (wherein Q is a C₂₋₄ alkylene group, n is an integer of from 2 to 48, and X⁺ is Na⁺ or NH₄⁺) and 2 to 4 phenylalkyl groups are bonded.

### ADVANTAGEOUS EFFECTS OF INVENTION

According to the present invention, it is possible to provide an aqueous dispersion capable of forming a coating film excellent in water-resistance, antifogging property, and durable light resistance, a method for producing such an aqueous dispersion, an aqueous coating material and a coated article.

### DESCRIPTION OF EMBODIMENTS

Meanings of terms in the present invention are as follows.

A "(meth)acrylate" is a general term for an "acrylate" and a "methacrylate", and "(meth)acryl" is a general term for "acryl" and "methacryl".

A "unit" is a general term for an atomic group which is directly formed by polymerization of a monomer and derived from one molecule of the monomer, and an atomic group obtainable by chemically converting a portion of said atomic group.

The content of each unit (mol%) to all units which a polymer comprises, is obtainable by analyzing the polymer by nuclear magnetic resonance spectroscopy.

An "average particle size" is a value of D50 obtainable by a dynamic light scattering method using ELS-8000 (manufactured by Otsuka Electronics Co., Ltd.). Here, D50 is a particle diameter value at the volume cumulative 50 vol% calculated from the small particle side in the particle size distribution of particles measured by the dynamic light scattering method.

The aqueous dispersion of the present invention (hereinafter referred to also as "the present aqueous dispersion") is an aqueous dispersion comprising water, a surfactant and polymer particles dispersed in the water.

The polymer particles contained in the present aqueous dispersion are fluoropolymer particles and (meth)acrylate polymer particles, or polymer particles comprising a fluoropolymer and a (meth)acrylate polymer.

Further, the fluoropolymer in the present aqueous dispersion is a fluoropolymer which contains units based on a fluoroolefin in an amount of from 95 to 100 mol% to all units which the fluoropolymer comprises.

Further, the (meth)acrylate polymer in the present aqueous dispersion is a (meth)acrylate polymer which contains units based on an alkyl (meth)acrylate in an amount of from 75 to 100 mol% to all units which the (meth)acrylate polymer comprises.

Further, the surfactant in the present aqueous dispersion is a compound (hereinafter referred to also as a "specific surfactant") of such a structure that to a benzene ring, 1 group represented by the formula -(OQ)ₙOSO₃⁻X⁺ (wherein Q is a C₂₋₄ alkylene group, n is an integer of from 2 to 48, and X⁺ is Na⁺ or NH₄⁺) and 2 to 4 phenylalkyl groups, are bonded.

In the present aqueous dispersion, the term "polymer particles comprising a fluoropolymer and a (meth)acrylate polymer" means that one polymer particle comprises a fluoropolymer and a (meth)acrylate polymer. For example, polymer particles made of a blend of a fluoropolymer and a (meth)acrylate polymer, or core-shell form polymer particles wherein the core portion is made of one of the polymers and the shell portion is made of the other polymer, may be mentioned.

As the polymer particles comprising a fluoropolymer and a (meth)acrylate polymer, preferred are core-shell form polymer particles wherein the fluoropolymer is the core portion and the (meth)acrylate polymer is the shell portion.

The shell portion of the core-shell form polymer particles may be one to cover part of the surface of the core portion, or may be one to cover the entirety of the core portion.

Otherwise, the present aqueous dispersion may be an aqueous dispersion comprising the two types of polymer particles as the polymer particles, i.e. fluoropolymer particles and (meth)acrylate polymer particles.

Further, the present aqueous dispersion may be an aqueous dispersion comprising at least one of said fluoropolymer particles and (meth)acrylate polymer particles, and the above-mentioned core-shell form polymer particles.

The average particle sizes of the fluoropolymer particles, (meth)acrylate polymer particles and core-shell form polymer particles are, respectively, preferably from 30 to 300 nm, and, from such a viewpoint that particles will be densely packed and the water resistance of the coating film will be more excellent, more preferably from 50 to 200 nm, particularly preferably from 100.0 to 200.0 nm.

The coating film (hereinafter referred to also as the "present coating film") which is formed from the present aqueous dispersion is excellent in water resistance, antifogging property and durable light resistance. The reason for this is not necessarily clear, but it is considered as follows.

The specific surfactant contained in the present aqueous dispersion has a hydrophilic portion made of a polyoxyalkylene group and a sulfate group, and a bulky hydrophobic portion composed of a benzene ring group having 2 to 4 phenylalkyl groups bonded thereto.

Therefore, polymer particles (particularly fluoropolymer particles) are considered to be subjected to strong interfacial effects from the hydrophobic portion of the specific surfactant and to be present in the aqueous dispersion as polymer particles having a narrow particle size distribution. That is, the present coating film is formed by high-density and uniform packing of polymer particles having a narrow particle size distribution, whereby it will be excellent in water resistance with little void in the coating film. Further, in the present coating film formed by packing of the polymer particles having a narrow particle size distribution, the hydrophilic portions of the specific surfactant is homogeneously oriented in the surface of the coating film, whereby the present coating film will be excellent in the antifogging property.

Moreover, the interaction between the polymer particles (particularly fluoropolymer particles) and the specific surfactant is strong, whereby the specific surfactant is unlikely to bleed out from the coating film. Therefore, the present coating film is also excellent in long lasting effects of the water resistance and antifogging property.

Further, the specific surfactant has a benzene ring group having 2 to 4 phenylalkyl groups and thus absorbs ultraviolet light. Therefore, the deterioration of the polymer of the present coating film (particularly the (meth)acrylate polymer) is prevented, whereby even when exposed for a long period of time in an outdoor environment, hazing or peeling of the coating film will be unlikely to occur. Here, these effects will be developed particularly remarkably in the preferred range of the present invention.

The fluoropolymer of the invention contains units based on a fluoroolefin.

The fluoroolefin is an olefin having at least one of hydrogen atoms is substituted by a fluorine atom. The fluoroolefin may be one wherein at least one of hydrogen atoms not substituted by a fluorine atom may be substituted by a chlorine atom.

The fluoroolefin is preferably at least two types of fluoroolefins selected from the group consisting of CF₂=CF₂ (hereinafter referred to also as "TFE"), CF₂=CFCF₃ (hereinafter referred to also as "HFP"), CF₂=CFCl (hereinafter referred to also as "CTFE") and CH₂=CF₂ (hereinafter referred to also as "VDF"). As the fluoroolefin, from the viewpoint of weather resistance of the coating film, a combination of VDF and at least one type selected from the group consisting of TFE, CTFE and HFP, is more preferred, and a combination of VDF and one type selected from the group consisting of TFE, CTFE and HFP, is particularly preferred.

As specific examples of the fluoropolymer of the present invention, the following fluoropolymers may be mentioned. Here, in each specific example, the sum of the respective units which the fluoropolymer comprises, is 100 mol%.

A fluoropolymer comprising units based on VDF, units based on TFE and units based on CTFE in amounts in this order of from 30 to 95 mol%, from 1 to 60 mol% and from 0 to 30 mol%, to all units which the fluoropolymer comprises.

A fluoropolymer comprising units based on VDF, units based on TFE and units based on HFP in amounts in this order of from 30 to 95 mol%, from 0 to 40 mol% and from 1 to 50 mol%, to all units which the fluoropolymer comprises.

A fluoropolymer comprising units based on TFE and units based on HFP in amounts in this order of from 70 to 99 mol% and from 1 to 30 mol%, to all units which the fluoropolymer comprises.

The fluoropolymer contains units based on a fluoroolefin in an amount of from 95 to 100 mol% to all units which the fluoropolymer comprises.

The fluoropolymer may contain, in addition to the units based on a fluoroolefin, units based on a non-fluorinated monomer copolymerizable with the fluoroolefin, in an amount of less than 5 mol%, to all units which the fluoropolymer comprises.

As specific examples of the non-fluorinated monomer, olefins such as ethylene, propylene, isobutylene, etc., vinyl ether, allyl ether and vinyl ester may be mentioned.

The (meth)acrylate polymer in the present invention contains units based on an alkyl (meth)acrylate.

Further, the (meth)acrylate polymer in the present invention preferably contains no fluorine atom.

The alkyl (meth)acrylate may be methyl (meth)acrylate, ethyl (meth)acrylate, propyl (meth)acrylate, butyl (meth)acrylate, 2-ethylhexyl (meth)acrylate, cyclohexyl (meth)acrylate, etc. The alkyl (meth)acrylate is, from the viewpoint of the processability of the coating film, preferably at least one type selected from the group consisting of methyl (meth)acrylate, butyl (meth)acrylate, 2-ethylhexyl (meth)acrylate and cyclohexyl (meth)acrylate, particularly preferably at least one type selected from methyl methacrylate and butyl methacrylate.

The (meth)acrylate polymer in the present invention contains units based on the alkyl (meth)acrylate in an amount of preferably from 40 to 100 mol%, more preferably from 75 to 100 mol%, to all units which the (meth)acrylate polymer comprises.

The (meth)acrylate polymer in the present invention may further contain units based on a hydroxyalkyl (meth)acrylate. In such a case, hydroxy groups in the units based on a hydroxyalkyl (meth)acrylate, will function as crosslinking groups thereby to improve the curability of the coating film.

Specific examples of the hydroxyalkyl (meth)acrylate may be 2-hydroxyethyl (meth)acrylate, 2-hydroxypropyl (meth)acrylate and 4-hydroxybutyl (meth)acrylate. As the hydroxyalkyl (meth)acrylate, 2-hydroxyethyl (meth)acrylate is preferred.

In a case where the (meth)acrylate polymer in the present invention contains units based on a hydroxyalkyl (meth)acrylate, from the viewpoint of the hardness of the coating film, it preferably contains units based on a hydroxyalkyl (meth)acrylate in an amount of at most 20 mol% to all units which the (meth)acrylate polymer comprises.

As the hydroxyalkyl (meth)acrylate, two or more types may be used in combination.

The (meth)acrylate polymer may contain units based on monomers other than the alkyl (meth)acrylate and hydroxy (meth)acrylate, in an amount of at most 70 mol% to all units which the (meth)acrylate polymer comprises. When units based on other monomers are contained, their content is preferably less than 60 mol%, more preferably less than 25 mol%, to all units which the (meth)acrylate polymer comprises. Specific examples of other monomers may be an unsaturated carboxylic acid (such as (meth)acrylic acid), a hydrolyzable silyl group-containing monomer, an alkyl vinyl ether, a hydroxy group-containing alkyl vinyl ether, a vinyl carboxylate (such as vinyl versatate) and an α-olefin. Here, the hydrolyzable silyl group is a group which forms a silanol group by hydrolysis.

As specific examples of the (meth)acrylate polymer in the present invention, the following (meth)acrylate polymers may be mentioned. Here, in each specific example, the sum of the respective units which the (meth)acrylate polymer comprises, is 100 mol%.

A (meth)acrylate polymer comprising units based on methyl (meth)acrylate and units based on butyl (meth)acrylate or ethyl (meth)acrylate, in amounts in this order, of from 40 to 100 mol% and from 0 to 60 mol%, to all units which the (meth)acrylate polymer comprises.

A (meth)acrylate polymer comprising units based on methyl (meth)acrylate, units based on ethyl (meth)acrylate and units based on butyl (meth)acrylate, in amounts in this order, of from 29 to 70 mol%, from 1 to 20 mol% and from 29 to 70 mol%, to all units which the (meth)acrylate polymer comprises.

A (meth)acrylate polymer comprising units based on methyl (meth)acrylate and units based on vinyl versatate, in amounts in this order, of from 30 to 70 mol% and from 30 to 70 mol%, to all units which the (meth)acrylate polymer comprises.

A (meth)acrylate polymer comprising units based on methyl (meth)acrylate, units based on butyl (meth)acrylate and units based on 2-hydroxyethyl (meth)acrylate, in amounts in this order, of from 55 to 75 mol%, from 1 to 30 mol% and from 1 to 10 mol%, to all units which the (meth)acrylate polymer comprises.

Regardless configuration of the polymer particles, the content of the fluoropolymer to the total mass of the fluoropolymer and the (meth)acrylate polymer contained in the present aqueous dispersion is preferably from 20 to 80 mass%, more preferably from 30 to 70 mass%, and from the viewpoint of the balance between processability and weather resistance of the present coating film, particularly preferably from 40 to 60 mass%.

In a case where the present aqueous dispersion contains particles of the fluoropolymer and particles of the (meth)acrylate polymer, the total of the contents of the particles of the fluoropolymer and the particles of the (meth)acrylate polymer, is preferably from 10 to 80 mass%, more preferably from 10 to 70 mass%, to the total mass of the aqueous dispersion.

In a case where the present aqueous dispersion contains core-shell form polymer particles, the content of the core-shell form polymer particles is preferably from 10 to 70 mass%, more preferably from 40 to 60 mass%, to the total mass of the aqueous dispersion.

In a case where the present aqueous dispersion contains core-shell form polymer particles wherein the fluoropolymer is the core portion and the (meth)acrylate polymer is the shell portion, as specific examples of the core-shell form polymer particles, the following core-shell form polymer particles may be mentioned. Here, in each specific example, the sum of the respective units which the core-shell form polymer particles comprise, is 100 mol%.

Core-shell form polymer particles comprising units based on VDF, units based on TFE, units based on methyl (meth)acrylate, units based on butyl (meth)acrylate and units based on 2-ethylhexyl (meth)acrylate, in amounts in this order, of from 30 to 60 mol%, from 1 to 30 mol%, from 15 to 45 mol%, from 0 to 30 mol% and from 0 to 10 mol%, to all units which the core-shell polymer particles comprise.

Core-shell form polymer particles comprising units based on VDF, units based on HFP, units based on methyl (meth)acrylate, units based on ethyl (meth)acrylate and units based on butyl (meth)acrylate, in amounts in this order, of from 50 to 80 mol%, from 1 to 20 mol%, from 1 to 20 mol%, from 0 to 10 mol% and from 0 to 20 mol%, to all units which the core-shell form polymer particles comprise.

Core-shell form polymer particles comprising units based on TFE, units based on HFP, units based on methyl (meth)acrylate and units based on vinyl versatate, in amounts in this order, of from 30 to 60 mol%, from 1 to 10 mol%, from 10 to 30 mol%, and from 10 to 30 mol%, to all units which the core-shell form polymer particles comprise.

Core-shell form polymer particles comprising units based on VDF, units based on TFE, units based on CTFE, units based on methyl (meth)acrylate, units based on butyl (meth)acrylate and units based on 2-hydroxyethyl (meth)acrylate, in amounts in this order, of from 30 to 60 mol%, from 1 to 10 mol%, from 1 to 10 mol%, from 10 to 40 mol%, from 1 to 20 mol% and from 0.1 to 10 mol%, to all units which the core-shell form polymer particles comprise.

The surfactant in the present invention (the specific surfactant) is a compound of such a structure that to a benzene ring, 1 group represented by the formula -(OQ)ₙOSO₃⁻X⁺ (wherein Q is a C₂₋₄ alkylene group, n is an integer of from 2 to 48, and X⁺ is Na⁺ or NH₄⁺) and 2 to 4 phenylalkyl groups, are bonded.

That is, it has such a structure that to a benzene ring, 2 to 4 phenylalkyl groups and 1 group represented by the formula -(OQ)ₙOSO₃⁻X⁺ are, respectively, bonded to different carbon atoms among the carbon atoms constituting the benzene ring. Here, to the phenyl moiety of a phenylalkyl group, an alkyl group or an alkoxy group may be bonded.

The number of carbon atoms in the alkyl moiety of a phenylalkyl group is preferably 1 or 2, particularly preferably 2, from the viewpoint of the surface activating effect of the specific surfactant due to such that the above alkyl moiety will alleviate intramolecular interaction (such as conjugation) between benzene rings, from the viewpoint of the surface activating effect of the specific surfactant due to the chain length or the steric structure of the above alkyl moiety, and from the viewpoint of the ultraviolet absorbing effect of the specific surfactant.

The number of phenylalkyl groups in the specific surfactant is preferably 2. The respective phenylalkyl groups may be the same or different, but are preferably the same.

Specific examples of the phenylalkyl group are a benzyl group (PhCH₂-) and a phenylethyl group. As the phenylalkyl group, a phenylethyl group is preferred. The phenylethyl group may be a 1-phenylethyl group (PhCH₂CH₂-) or a 2-phenylethyl group (PhCH(CH₃)-), but is preferably a 2-phenylethyl group.

To the benzene ring in the specific surfactant, at least one group of either an alkyl group or an alkoxy group (hereinafter referred to also as a "substituent") is preferably bonded. The substituent is preferably a C₁₋₄ alkyl group or a C₁₋₄ alkoxy group, more preferably a C₁₋₄ alkyl group, particularly preferably a methyl group. The substituent is a hydrophobic electron donating group, and when it is bonded to the benzene ring, the electronic stability of the benzene ring to which a plurality of phenylalkyl groups are bonded, will be improved, to increase the surface activating effect of the specific surfactant.

In a case where the substituent is bonded, it is preferred that one substituent is bonded to the benzene ring. Here, in a case where two or more substituents are bonded, such substituents may be the same or different.

In the group represented by the formula -(OQ)ₙOSO₃⁻X⁺ in the specific surfactant, Q is preferably -CH₂CH₂-. Further, in a case where Q is a C_{3 or 4} alkylene group, Q may be a straight-chain alkylene group or a branched chain alkylene group. In a case where a plurality of Q's are present, Q's may be the same or different. When a plurality of Q's are present, their binding order is not particularly limited and may be in a block form or in a random form.

n is an integer from 2 to 48, preferably an integer of from 2 to 30, more preferably an integer of from 6 to 24.

A specific example of the group represented by the formula -(OQ)ₙOSO₃⁻X⁺ may be a group represented by the formula -(OCH₂CH₂)ₙ₀OSO₃⁻X⁺ (wherein n0 is an integer of from 6 to 24, and X⁺ is Na⁺ or NH₄⁺).

The specific surfactant is preferably a compound represented by the following formula (S1).

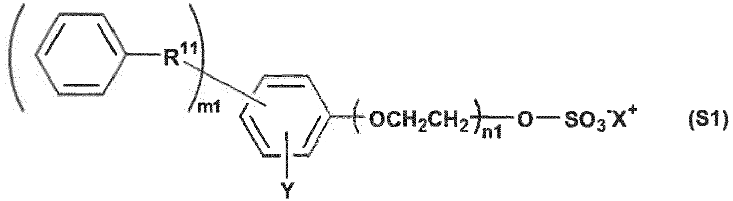

In the above formula (S1), R¹¹ is -CH₂CH₂- or -CH(CH₃)-. n1 is an integer of from 2 to 48, preferably an integer of from 6 to 24. X⁺ is Na⁺ or NH₄⁺, and Y is a C₁₋₄ alkyl group, preferably a methyl group. m1 is an integer of from 2 to 4, particularly preferably 2.

The plurality of R¹¹ may be the same or different, but are preferably the same.

In the specific surfactant, from the viewpoint of the antifogging property of the coating film, each of two groups among the 2 to 4 phenylalkyl groups is preferably bonded to a carbon atom at the ortho position to the carbon atom of the benzene ring, to which the above group represented by the formula -(OQ)ₙOSO₃⁻X⁺ is bonded.

As the specific surfactant, a compound represented by the following formula (S2) is particularly preferred.

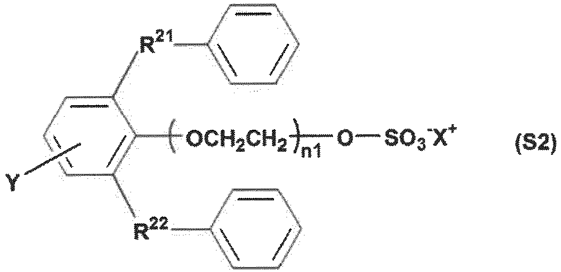

In the formula (S2), R²¹ and R²² are each independently -CH₂CH₂- or -CH(CH₃)-, preferably -CH(CH₃)-. n1 is an integer from 2 to 48, preferably an integer of from 6 to 24. X⁺ is Na⁺ or NH₄⁺. Y is a C₁₋₄ alkyl group, preferably a methyl group. Further, Y is preferably bonded to a carbon atom at the para position to the carbon atom of the benzene ring, to which the above group represented by the formula -(OQ)ₙOSO₃⁻X⁺ is bonded. R²¹ and R²² are preferably the same.

The content of the specific surfactant in the present aqueous dispersion is preferably from 0.0001 to 10 mass%, more preferably from 0.01 to 5 mass%, particularly preferably from 0.05 to 2 mass%, to the total mass of the aqueous dispersion. Further, the content of the specific surfactant is preferably from 0.001 to 100 mass%, more preferably from 0.1 to 10 mass%, to the total mass of the fluoropolymer which the present aqueous dispersion contains. When the specific surfactant is contained within the above range, the coating film will be formed by denser packing, whereby the water resistance and antifogging property of the coating film will be improved.

The present aqueous dispersion contains, as a coating solvent (dispersion medium), water only, or a mixed liquid of water and a water-soluble organic solvent.

Specific examples of the water-soluble organic solvent may be tert-butanol, propylene glycol, dipropylene glycol, dipropylene glycol monomethyl ether and tripropylene glycol. The content of the water-soluble organic solvent is preferably from 1 to 40 parts by mass to 100 parts by mass of water.

The present aqueous dispersion preferably contains, as a dispersion medium, water only, in an amount of from 10 to 90 mass%, to the total mass of the aqueous dispersion.

In the present aqueous dispersion, components (hereinafter referred to also as "other components") other than the above polymer particles, the specific surfactant, water and the water-soluble organic solvent, may be contained within a range not to impair the effects of the present invention.

Specific examples of such other components may be a surfactant other than the specific surfactant, and polymer particles made of a polymer other than the above-described fluoropolymer and (meth)acrylate polymer.

The aqueous dispersion of the present invention can be produced by mixing a fluoropolymer aqueous dispersion and a (meth)acrylate polymer aqueous dispersion and the specific surfactant. The specific surfactant may be preliminarily contained in either the fluoropolymer aqueous dispersion or the (meth)acrylate polymer aqueous dispersion.

The aqueous dispersion of the present invention may also be produced by a method of polymerizing a (meth)acrylate in the fluoropolymer aqueous dispersion, or a method of polymerizing a fluoroolefin in the (meth)acrylate polymer aqueous dispersion. Here, the specific surfactant may be incorporated by a method of using an aqueous dispersion containing the specific surfactant, as the aqueous dispersion before subjecting to polymerization, or a method of incorporating it to the aqueous dispersion obtained after completion of the polymerization. In this way, it is possible to produce an aqueous dispersion of the present invention having the above-mentioned core-shell form polymer particles dispersed.

As an embodiment of the method for producing the present aqueous dispersion, a method may be mentioned wherein in the presence of a fluoropolymer aqueous dispersion, an alkyl (meth)acrylate is polymerized to obtain an aqueous dispersion wherein core-shell form particles wherein the fluoropolymer is the core portion and the (meth)acrylate polymer is the shell portion, are dispersed in water, and wherein the above polymerization of the alkyl (meth)acrylate is conducted in the presence of the specific surfactant.

Here, the specific surfactant may be added after the polymerization of the alkyl (meth)acrylate, or may be preliminarily contained in the fluoropolymer aqueous dispersion.

Preferably, by using a fluoropolymer aqueous dispersion containing no specific surfactant, the specific surfactant is incorporated to the fluoropolymer aqueous dispersion, and by using the obtained fluoropolymer aqueous dispersion containing the specific surfactant, the polymerization of the alkyl (meth)acrylate is conducted to produce an aqueous dispersion containing core-shell form polymer particles and the specific surfactant.

Further, in addition to the alkyl (meth)acrylate, a hydroxyalkyl (meth)acrylate may be further used together.

The respective components are as described above in the present aqueous dispersion, and therefore, their description is omitted here.

The amount of the alkyl (meth)acrylate to be used, may suitably be determined so that the content of the fluoropolymer to the total mass of the fluoropolymer and the (meth)acrylate polymer to be formed, would be preferably from 30 to 70 mass% (more preferably from 40 to 60 mass%).

The amount of the specific surfactant to be used, may suitably be determined so that it would be preferably from 0.0001 to 10 mass% (more preferably from 0.01 to 5 mass%, particularly preferably from 0.05 to 2 mass%) to the total mass of the obtainable aqueous dispersion. Further, the amount of the specific surfactant to be used, may suitably be determined so that it would be preferably from 0.001 to 100 mass% (more preferably from 0.1 to 10 mass%) to the total mass of the fluoropolymer.

The amount of water and the water-soluble organic solvent to be used, may suitably be determined so that it would be preferably from 10 to 90 mass% to the total mass of the obtainable aqueous dispersion.

As specific examples of the polymerization method, an emulsion polymerization method and a suspension polymerization method may be mentioned.

In the polymerization, a surfactant other than the specific surfactant, a radical polymerization initiator, a chain transfer agent, a chelating agent, a pH adjusting agent, etc. may be added. These may be preliminarily contained in the fluoropolymer aqueous dispersion, may be added at the time of polymerizing the alkyl (meth)acrylate, or may be added after the polymerization of the alkyl (meth)acrylate.

In the case of producing an aqueous dispersion of the present invention containing the core-shell form polymer particles by using the fluoropolymer aqueous dispersion, preferred as the fluoropolymer aqueous dispersion is an aqueous dispersion produced by polymerizing a fluoroolefin in a polymerization medium containing water in the presence of a surfactant other than the specific surfactant.

As the polymerization medium, water alone or a mixed medium of water and an aqueous organic solvent is preferred. As the surfactant other than the specific surfactant, at least one type selected from a fluorinated surfactant and a nonionic surfactant containing no fluorine, is preferred. As the fluorinated surfactant, a fluorinated anionic surfactant is preferred. The amount of the surfactant is preferably from 0.001 to 10 mass%, more preferably from 0.01 to 5 mass%, particularly preferably from 0.1 to 1 mass%, to the total mass of water and the water-soluble organic solvent used at the time of polymerizing the fluoroolefin.

Specific examples of the fluorinated surfactant may be fluorinated anionic surfactants, such as CF₃O(CF₂CF₂O)₂CF₂COO⁻M⁺, F(CF₂)ₜCOO⁻M⁺, CF₃CF₂CF₂OCF(CF₃)CF₂OCF(CF₃)COO⁻M⁺, CF₃CF₂OCF(CF₃)CF₂OCF(CF₃)COO⁻M⁺, CF₃OCF(CF₃)CF₂OCF(CF₃)COO⁻M⁺, H(CF₂CF2)₂CH₂OCF(CF₃)COO⁻M⁺, H(CF₂)ₜCOO⁻M⁺, F(CF₂CF₂)ₜCH₂CH₂SO₃⁻M⁺, etc. (wherein M⁺ is Na⁺ or NH₄⁺, and t is an integer of from 2 to 10).

The nonionic surfactant containing no fluorine may be a reactive nonionic surfactant or a non-reactive nonionic surfactant, and from the viewpoint of water resistance of the coating film, a reactive nonionic surfactant is preferred.

Examples of the reactive nonionic surfactant may be ADEKA REASOAP ER series (ADEKA REASOAP ER-40, ADEKA REASOAP ER-30, ADEKA REASOAP ER-20, ADEKA REASOAP ER-10) (manufactured by ADEKA CORPORATION), ADEKA REASOAP NE series (ADEKA REASOAP NE-30, ADEKA REASOAP NE-20, ADEKA REASOAP NE-10) (manufactured by ADEKA CORPORATION), etc.

Another embodiment of the method for producing the present aqueous dispersion may be a method of mixing a first aqueous dispersion which contains water and in which fluoropolymer particles are dispersed in the water, and a second aqueous dispersion which contains water and in which (meth)acrylate polymer particles are dispersed in the water, to obtain an aqueous dispersion in which the fluoropolymer particles and the (meth)acrylate polymer particles are dispersed in water, and in which either one or both of the first aqueous dispersion and the second aqueous dispersion contains the specific surfactant, or in which both of the first aqueous dispersion and second aqueous dispersion do not contain the specific surfactant, and the specific surfactant is added after mixing the first aqueous dispersion and the second aqueous dispersion.

As the first aqueous dispersion, the above-described aqueous dispersion of a fluoropolymer similar to one used at the time of producing the aqueous dispersion of the present invention containing the core-shell form polymer particles, may be mentioned. The first aqueous dispersion is preferably a fluoropolymer aqueous dispersion which contains the fluorinated anionic surfactant and/or the reactive non-ionic surfactant not containing fluorine, used at the time of the polymerization of a fluoroolefin, and which does not contain the specific surfactant.

The second aqueous dispersion is obtainable by polymerizing an alkyl (meth)acrylate in the presence of a surfactant, in a polymerization medium containing water. As monomers, a hydroxyalkyl (meth)acrylate or other monomers other than the alkyl (meth)acrylate, may further be used. As the second aqueous dispersion, preferred is an aqueous dispersion containing the specific surfactant obtainable by polymerizing an alkyl (meth)acrylate in the presence of the specific surfactant.

The mixing proportions of the first aqueous dispersion and the second aqueous dispersion may suitably be determined so that in the obtainable aqueous dispersion, the content of the fluoropolymer to the total mass of the fluoropolymer and the (meth)acrylate polymer would be preferably from 20 to 80 mass% (more preferably from 30 to 70 mass%, particularly preferably from 40 to 60 mass%). The amounts of the respective monomers (the fluoroolefin, the alkyl (meth)acrylate, etc.) to be used, may be suitably determined in the same manner.

The amount of the specific surfactant to be used, may be suitably determined so that it would be preferably from 0.0001 to 10 mass% (more preferably from 0.01 to 5 mass%, particularly preferably from 0.05 to 2 mass%), to the total mass of the obtainable aqueous dispersion.

The amount of water to be used in the first aqueous dispersion or the second aqueous dispersion may be suitably determined so that it would be from 10 to 90 mass%, to the total mass of the obtainable aqueous dispersion.

The aqueous coating material of the present invention (hereinafter referred to as "the present aqueous coating material") may, in addition to the aqueous dispersion of the present invention, further contain additives such as a pigment (an inorganic color pigment, an organic color pigment, an extender pigment, etc.), a curing agent, a curing assistant, a coalescent, a thickener, a dispersing agent, a matting agent, a defoamer, a color-adjusting agent, a ultraviolet absorber, a light stabilizer, a surface modifier, a low pollution agent, etc.

The present aqueous coating material contains the aqueous dispersion preferably in an amount of from 10 to 80 mass%, more preferably in an amount of from 10 to 60 mass%, to the total mass of the present aqueous coating material. When the content of the aqueous dispersion is at least 10 mass%, the weather resistance of the coating film will be improved, and when it is at most 80 mass%, the film forming properties of the present aqueous coating material will be improved.

The present aqueous coating material preferably contains the fluoropolymer and the (meth)acrylate polymer in an amount of from 10 to 90 mass% in total to the total mass of the present aqueous coating material.

A coated article of the present invention comprises a substrate and a coating film (the present coating film) disposed on the substrate and formed from the present aqueous coating material.

Specific examples of the substrate may be an organic material such as a resin, rubber, wood, etc., an inorganic material such as concrete, glass, ceramics, stone, etc., iron, an iron alloy, aluminum and an aluminum alloy.

The thickness of the coating film is preferably from 5 to 300 µm, more preferably from 10 to 100 µm. When the thickness of the coating film is at least 5 µm, the blocking resistance of the coating film will be improved, and when it is at most 300 µm, the weather resistance of the coating film will be improved.

The coated article can be produced by applying the present aqueous coating material to the surface of the substrate, followed by drying to form the present coating film. The present aqueous coating material may be applied directly to the surface of the substrate, or may be applied onto a surface having known surface treatment (undercoat treatment, etc.) applied to the surface of the substrate. Further, after forming another layer (such as an undercoat layer) on the substrate, the present aqueous coating material may be applied onto the undercoat layer.

Specific examples of the method for applying the present aqueous coating material may be methods of using coating apparatus such as a brush, a roller, dipping means, a spray, a roll coater, a die coater, an applicator, a spin coater, etc.

The drying temperature after coating is preferably from 25 to 300°C.

### EXAMPLES

Hereinafter, the present invention will be described in detail with reference to Examples. Ex. 1 to Ex. 3 are Examples of the present invention, and Ex. 4 to Ex. 6 are Comparative Examples. However, the present invention is not limited to these Examples. Further, the blend amounts of the respective components in Table given later, represent the mass amounts.

### [Methods for evaluation of test plate]

### (Water resistance evaluation 1)

A test plate prepared by the method described below was immersed for 1 day in warm water at 60°C, then immersed for 15 hours in cold water of 5°C, and then dried at 5°C, whereupon the appearance of the coating film was visually evaluated.
A: Occurrence of hazing or blistering was not observed in an area of at least 80% of the coating film surface.
B: Occurrence of hazing or blistering was not observed in an area of at least 60% and less than 80% of the coating film surface.
C: Occurrence of hazing or blistering was observed in an area of more than 40% of the coating film surface.

### (Water resistance evaluation 2)

A test plate prepared by the method described below was immersed for 3 months in warm water at 60°C and then dried at 5°C, whereupon the appearance of the coating film was visually evaluated.
A: Occurrence of hazing or blistering was not observed in an area of at least 80% of the coating film surface.
B: Occurrence of hazing or blistering was not observed in an area of at least 60% and less than 80% of the coating film surface.
C: Occurrence of hazing or blistering was observed in an area of more than 40% of the coating film surface.

### (Antifogging property evaluation)

The test plate subjected to the water resistance evaluation 2 was left to stand for 3 minutes in a thermostatic bath at 50°C under a humidity of 98% RH, whereupon whether or not fogging was formed on the coating film surface was visually evaluated.
A: Fogging was not observed in an area of at least 80% of the coating film surface.
B: Occurrence of hazing or blistering was not observed in an area of at least 60% and less than 80% of the coating film surface.
C: Fogging was observed in an area of more than 40% of the coating film surface.

### (Durable light resistance evaluation (real exposure test))

The test plate was installed outdoors in Naha City, Okinawa Prefecture, and upon expiration of one year, the presence or absence of peeling of the coating film was evaluated according to the following standards.
A: Cracking of the coating film and peeling of the coating film were not observed.
B: Cracking was slightly observed at the end of the coating film surface of the test plate.
C: Cracking and peeling of the coating film were confirmed on the entire surface of the coating film surface.

### [Main components used in the production of aqueous dispersions and aqueous coating materials]

Fluoroolefin: VDF, TFE, CTFE
(Meth)acrylate: methyl methacrylate (MMA), butyl acrylate (BA), 2-hydroxyethyl methacrylate (2-HEMA)
Surfactant: surfactants 1 to 5 as shown below
Coalescent: ethylene glycol mono(2-ethylhexyl) ether

### [Ex. 1]

### (Production of aqueous dispersion)

Into an autoclave, ion-exchanged water (500 g), CF₃O(CF₂CF₂O)₂CF₂COO⁻NH₄⁺ (0.5 g) and polyoxyethylene monostearate (0.05 g) were charged and vacuum-degassed. Thereafter, a mixed gas comprising VDF, TFE and CTFE in amounts in this order of 74.1 mol%, 13.9 mol% and 12.0 mol%, was injected so that the internal pressure of the autoclave would be from 0.75 to 0.8 MPa. Subsequently, ammonium persulfate (0.2 g) was charged to initiate the polymerization at 70°C.

During the polymerization, the mixed gas was supplied to the autoclave so that the internal pressure of the autoclave would be from 0.75 to 0.8 MPa, and the polymerization was stopped after 8 hours from the start of polymerization, to obtain a first dispersion containing fluoropolymer particles. To all units which the fluoropolymer has, the content of units based, respectively, on VDF, TFE and CTFE were, in this order, 74.2 mol%, 13.0 mol% and 12.8 mol%.

Into a flask, the first dispersion (190 g) and the surfactant 1 (a compound represented by the following formula (S3), wherein n≒20) (1.8 g) were put, and the inside temperature of the flask was held at 75°C. On the other hand, a solution containing MMA (50 g), BA (30 g), 2-HEMA (8 g), the surfactant 1 (1.8 g), ammonium persulfate (0.1 g) and ion-exchanged water (80 g) was prepared.

While dropwise adding the solution to the flask with stirring, the polymerization was proceeded. After completion of the dropwise addition, stirring was continued for 3 hours as it was, and further stirred for 1 hour at a flask inner temperature of 80°C. Thereafter, the flask was cooled, the internal solution of the flask was filtered through a 100 mesh screen, to obtain an aqueous dispersion 1 containing core-shell form polymer particles, wherein the polymer concentration was 48.0 mass%, and the shell portion made of the (meth)acrylate polymer was formed on the surface of the core portion made of the fluoropolymer. Of the aqueous dispersion 1, the content (hereinafter referred to also as the "polymer ratio") of the fluoropolymer to the total mass of the fluoropolymer and the (meth)acrylate polymer was 50 mass%, and the average particle size of the core-shell form polymer particles was 175.2 nm.

To the aqueous dispersion 1 (47 g), the coalescent (3.0 g) was added and mixed, to obtain an aqueous coating material 1.

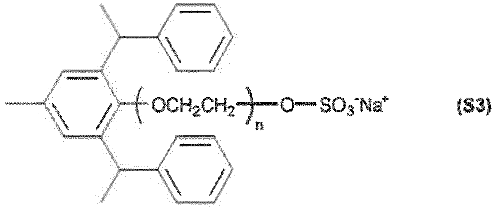

### [Ex. 2]

Into a flask, ion-exchanged water (150 g) and the surfactant 1 (1.8 g) were charged, and while stirring inside of the flask, MMA (50 g), BA (30 g), 2-HEMA (8 g) and the surfactant 1 (1.8 g) were charged, the internal temperature of the flask was maintained at 75°C. Next, polymerization was proceeded by charging ammonium persulfate (0.1 g) to the flask. After 3 hours, while holding the internal temperature of the flask at 80°C, stirring was continued for an additional 1 hour. Thereafter, the flask was cooled, and the internal solution of the flask was filtered through a 100 mesh screen to obtain an aqueous dispersion containing (meth)acrylate polymer particles. Here, to all units which the (meth)acrylate polymer particles have, the contents of units based, respectively, on MMA, BA and 2-HEMA were, in this order, 62.8 mol%, 29.5 mol% and 7.7 mol%.

The obtained aqueous dispersion (100 g) and the first dispersion in Ex. 1 (114 g) were mixed to obtain an aqueous dispersion 2 in which fluoropolymer particles and (meth)acrylate polymer particles are dispersed. In the aqueous dispersions 2, the polymer ratio was 50 mass%, and the average particle sizes of the respective polymer particles were 140.1 nm.

To the aqueous dispersion 2 (47 g), the coalescent (3.0 g) was added to obtain an aqueous coating material 2.

### [Ex. 3]

An aqueous dispersion 3 was obtained in the same manner as in Ex. 1, except that in Ex. 1, the surfactant 1 was changed to a surfactant 2 (a compound represented by the following formula (S4), wherein n≒20). In the aqueous dispersion 3, the polymer ratio was 50 mass%, and the average particle size of the core-shell form polymer particles was 182.1 nm.

To the aqueous dispersion 3 (47 g), the coalescent (3.0 g) was added to obtain an aqueous coating material 3.

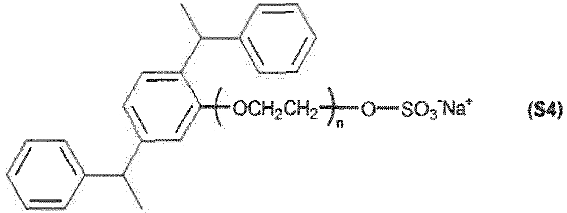

### [Ex. 4]

An aqueous dispersion 4 was obtained in the same manner as in Ex. 1, except that in Ex. 1, the surfactant 1 was changed to a surfactant 3 (a compound represented by the following formula (S5), wherein n≒20). In the aqueous dispersion 4, the polymer ratio was 50 mass%, and the average particle size of the core-shell form polymer particles was 195.8 nm.

To the aqueous dispersion 4 (47 g), the coalescent (3.0 g) was added to obtain an aqueous coating material 4.

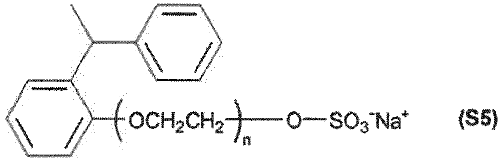

### [Ex. 5]

An aqueous dispersion 5 was obtained in the same manner as in Ex. 1, except that in Ex. 1, the surfactant 1 was changed to a surfactant 4 (a compound represented by the following formula (S6), wherein n≒20). In the aqueous dispersion 5, the polymer ratio was 50 mass%, and the average particle size of the core-shell form polymer particles was 185.5 nm.

To the aqueous dispersion 5 (47 g), the coalescent (3.0 g) was added to obtain an aqueous coating material 5.

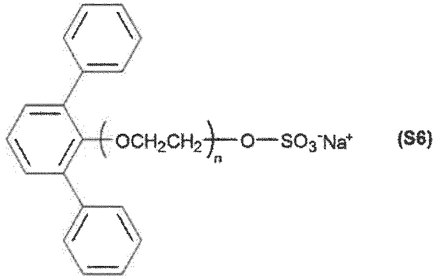

### [Ex. 6]

An aqueous dispersion 6 was obtained in the same manner as in Ex. 1, except that in Ex. 1, the surfactant 1 was changed to a surfactant 5 (sodium lauryl sulfate, manufactured by Nikko Chemicals Co., Ltd., trade name "NIKKOL SLS"). In the aqueous dispersion 6, the polymer ratio was 50 mass%, and the average particle size of the core-shell form polymer particles was 200.1 nm.

To the aqueous dispersion 6 (47 g), the coalescent (3.0 g) was added to obtain an aqueous coating material 6.

Using the aqueous coating materials 1 to 6, test plates were, respectively prepared.

Each aqueous coating material was applied on the surface of a polyester resin baked coating plate by using a spraying apparatus. The applied amount of each aqueous coating material was 50 g/m².

Thereafter, each aqueous coating material applied was baked on the polyester resin baked coating plate in an atmosphere at 100°C for 10 minutes to obtain a test plate having a coating film formed on the polyester resin baked coating plate, and the test plate was subjected to the above-mentioned evaluation method.

The composition of each aqueous dispersion and the evaluation results of each test plate are shown in Table 1. Here, the mass of the surfactant in Table 1 represents the content (mass%) to the total mass of the aqueous dispersion.

**[Table 1]**

| | | | Ex. 1 | Ex. 2 | Ex. 3 | Ex. 4 | Ex. 5 | Ex. 6 |
|---|---|---|---|---|---|---|---|---|
| No. of aqueous coating material | | | 1 | 2 | 3 | 4 | 5 | 6 |
| Components contained in aqueous dispersion | Fluoropolymer (mol%) | VDF | 74.2 | 74.2 | 74.2 | 74.2 | 74.2 | 74.2 |
| | | TFE | 13.0 | 13.0 | 13.0 | 13.0 | 13.0 | 13.0 |
| | | CTFE | 12.8 | 12.8 | 12.8 | 12.8 | 12.8 | 12.8 |
| | (Meth)acrylate polymer (mol%) | MMA | 62.8 | 62.8 | 62.8 | 62.8 | 62.8 | 62.8 |
| | | BA | 29 . 5 | 29.5 | 29.5 | 29.5 | 29.5 | 29.5 |
| | | 2-HEMA | 7.7 | 7.7 | 7.7 | 7.7 | 7.7 | 7.7 |
| | Surfactant (mass%) | 1 | 1.00 | 0.84 | | | | |
| | | 2 | | | 1.00 | | | |
| | | 3 | | | | 1.00 | | |
| | | 4 | | | | | 1.00 | |
| | | 5 | | | | | | 1.00 |
| | Average particle size of particles containing fluoropolymer (nm) | | 175.2 | 140.1 | 182.1 | 195.8 | 185.5 | 200.1 |
| Evaluations of physical properties of coating film | Water resistance 1 | | A | A | A | B | B | B |
| | Water resistance 2 | | A | A | A | B | C | C |
| | Antifogging properties | | A | A | B | C | B | C |
| | Durable light resistance | | A | A | B | B | C | C |

As shown in Ex. 1 to Ex. 3 in Table 1, when an aqueous dispersion in which core-shell form polymer particles with a shell portion made of a (meth)acrylate polymer formed on the surface of a core portion made of a fluoropolymer are dispersed in water, or an aqueous dispersion in which fluoropolymer particles and (meth)acrylate polymer particles are respectively dispersed in water, contains the specific surfactant, a coating film excellent in water resistance and antifogging property as well as in durable light resistance, will be formed. Further, even when the coating film is exposed for a long time in an environment in contact with water, such effects will be exhibited.

On the other hand, as shown in Ex. 4 to Ex. 6 in Table 1, when the specific surfactant is not used, the coating film will be inferior in at least one of water resistance and antifogging property.

The entire disclosures of Japanese Patent Application No. 2017-064830 filed on March 29, 2017 and Japanese Patent Application No. 2017-193509 filed on October 3, 2017 including specifications, claims, drawings and summaries are incorporated herein by reference in their entireties.

## Claims

1. An aqueous dispersion comprising water, a surfactant and polymer particles dispersed in the water, wherein
the polymer particles contained in the aqueous dispersion are fluoropolymer particles and (meth)acrylate polymer particles, or polymer particles comprising a fluoropolymer and a (meth)acrylate polymer,
the fluoropolymer contains units based on a fluoroolefin in an amount of from 95 to 100 mol% to all units which said fluoropolymer comprises,
the (meth)acrylate polymer contains units based on an alkyl (meth)acrylate in an amount of from 75 to 100 mol% to all units which said (meth)acrylate polymer comprises, and
the surfactant is a compound of such a structure that to a benzene ring, 1 group of the formula -(OQ)ₙOSO₃⁻X⁺ (wherein Q is a C₂₋₄ alkylene group, n is an integer of from 2 to 48, and X⁺ is Na⁺ or NH₄⁺) and 2 to 4 phenylalkyl groups are bonded.

2. The aqueous dispersion according to Claim 1, wherein the above polymer particles comprising a fluoropolymer and a (meth)acrylate polymer are polymer particles of a core-shell form wherein the fluoropolymer is a core portion and the (meth)acrylate polymer is a shell portion.

3. The aqueous dispersion according to Claim 1, wherein the above aqueous dispersion comprises fluoropolymer particles derived from a fluoropolymer aqueous dispersion, and (meth)acrylate polymer particles derived from a (meth)acrylate polymer aqueous dispersion.

4. The aqueous dispersion according to any one of Claims 1 to 3, wherein in the surfactant, each of two groups among the 2 to 4 phenylalkyl groups is bonded to a carbon atom at an ortho position to the carbon atom in the benzene ring, to which the above group represented by the formula -(OQ)ₙOSO₃⁻X⁺ is bonded.

5. The aqueous dispersion according to any one of Claims 1 to 4, wherein to the benzene ring in the surfactant, at least one group of either an alkyl group or an alkoxy group is further bonded.

6. The aqueous dispersion according to any one of Claims 1 to 4, wherein to the benzene ring in the surfactant, at least one methyl group is further bonded.

7. The aqueous dispersion according to any one of Claims 1 to 6, wherein the group represented by the formula -(OQ)ₙOSO₃⁻X⁺ in the surfactant is a group represented by the formula -(OCH₂CH₂)ₙ₀OSO₃⁻X⁺ (wherein n0 is an integer of from 6 to 24, and X⁺ is Na⁺ or NH₄⁺).

8. The aqueous dispersion according to any one of Claims 1 to 7, wherein the phenylalkyl groups in the surfactant are phenylethyl groups.

9. The aqueous dispersion according to any one of Claims 1 to 8, wherein the content of the surfactant is from 0.0001 to 10 mass%, to the total mass of the aqueous dispersion.

10. The aqueous dispersion according to any one of Claims 1 to 9, wherein the fluoroolefin consists of at least two types selected from the group consisting of CF₂=CF₂, CF₂=CFCF₃, CF₂=CFCl and CH₂=CF₂.

11. The aqueous dispersion according to any one of Claims 1 to 10, wherein the alkyl (meth)acrylate consists of at least one type selected from the group consisting of methyl (meth)acrylate, ethyl (meth)acrylate, propyl (meth)acrylate, butyl (meth)acrylate, 2-ethylhexyl (meth)acrylate and cyclohexyl (meth)acrylate.

12. The aqueous dispersion according to any one of Claims 1 to 11, wherein the (meth)acrylate polymer further contains units based on a hydroxyalkyl (meth)acrylate in an amount of more than 0 mol% and at most 20 mol% to all units which said (meth)acrylate polymer comprises.

13. An aqueous coating material comprising the aqueous dispersion as defined in any one of Claims 1 to 12.

14. A coated article comprising a substrate and a coating film disposed on the substrate and formed from the aqueous coating material as defined in Claim 13.

15. A method for obtaining an aqueous dispersion in which core-shell form polymer particles wherein a fluoropolymer is a core portion and a (meth)acrylate polymer is a shell portion are dispersed in water, by polymerizing an alkyl (meth)acrylate in the presence of a dispersion having fluoropolymer particles dispersed in water, wherein the polymerization of the alkyl (meth)acrylate is carried out in the presence of a surfactant which is such a compound that to a benzene ring, 1 group represented by the formula-(OQ)ₙOSO₃⁻X⁺ (wherein Q is a C₂₋₄ alkylene group, n is an integer of from 2 to 48, and X⁺ is Na⁺ or NH₄⁺) and 2 to 4 phenylalkyl groups are bonded.
